# EUROPÄISCHE PATENTANMELDUNG

(11) **EP 1 746 456 A2**
(43) Veröffentlichungstag der Anmeldung: **24.01.2007**
(21) Anmeldenummer: 06015370.7
(22) Anmeldetag: 24.07.2006
(51) Int. Cl.: G02F 1/1335, G02F 1/13357, G02F 1/1347

(54) **Flüssigkristallanzeigeeinrichtung**

(30) Priorität: 22.07.2005 DE 202005011574 U
(71) Anmelder: AEG Gesellschaft für moderne Informationssysteme mbH, 89077 Ulm (DE)
(72) Erfinder: Bayrle, Reiner, 89129 Langenau (DE); Bitter, Thomas, 73342 Bad Ditzenbach (DE); Bader, Otto, 88447 Warthausen (DE)
(74) Vertreter: Winter, Brandl, Fürniss, Hübner Röss, Kaiser, Polte Partnerschaft Patent- und Rechtsanwaltskanzlei

(57) **Zusammenfassung**

Es wird eine Flüssigkristallanzeigeeinrichtung mit LCD-Element und OLED-Hinterleuchtung bereitgestellt, die eine verbesserte Darstellung von Information ermöglicht.

Durch die Verwendung von LCD-Elementen (202) mit internen Reflektoren (216) oder internen Streuzentren, d. h. von LCD-Elementen bei denen sowohl die Beleuchtung von vorne aus Betrachtungsrichtung durch Tageslicht als auch von hinten mittels OLED-Hinterleuchtung transflektiv entlang ähnlicher Strahlungsgänge erfolgt, ergibt sich eine verbesserte Ablesbarkeit der Anzeige bei unterschiedlichen Umgebungslichtbedingungen. Zusätzlich erübrigt sich durch die Kombination einer OLED-Hinterleuchtung (210) mit solchen LCD-Elementen die sonst bei solchen LCD-Elementen notwendige Absorberschicht (212-1) auf der Rückseite, da die Funktion dieser Absorberschicht in vorteilhafter Weise durch die vordere OLED-Ansteuerelektrode (212) mit übemommen wird. Hierbei ist die vordere OLED-Aristeuerelektrode im Bereich der internen Reflektoren lichtdurchlässig (212-2) und sonst lichtabsorbierend (212-1) ausgebildet. Damit übernimmt das OLED-Element bzw. die Hinterleuchtungseinrichtung die bei diesen LCD-Elementen notwendige absorbierende Schicht auf der Rückseite außerhalb der internen Reflektoren. Hierdurch verringert sich auch die Bauhöhe einer solchen Anzeige.

## Beschreibung

Die Erfindung betrifft eine Flüssigkristallanzeigeeinrichtung gemäß dem Oberbegriff des Anspruchs 1.

Herkömmliche Flüssigkristallanzeigen, die ein LCD-Element zur Anzeige von Information umfassen, benötigen eine Hinterleuchtungseinrichtung. Diese Hinterleuchtungseinrichtung ist notwendig, da der Flüssigkristall in LCD-Elementen selbst nicht leuchtet, sondem lediglich zwischen durchsichtig und undurchsichtig geschaltet werden kann. Derartige Flüssigkristallanzeigen mit Hinterleuchtungseinrichtung sind beispielsweise aus der DE 101 08 411 A1 bekannt.

Zwischenzeitlich werden für Anzeigeelemente auch dünne filmartige und flexible OLED-Anzeigeeinrichtungen eingesetzt. Dies OLED-Elemente haben gegenüber LCD-Elementen den Vorteil, dass sie selbst leuchtend sind so dass sich eine Hinterleuchtung erübrigt. Ein solches Anzeigeelement ist beispielsweise aus der WO 03/088370 A2 bekannt.

Aus der DE 199 16 747 A1 und aus der WO 97/384347 ist die Kombination einer OLED-Element mit einem herkömmlichen LCD-Element bekannt, wobei das OLED-Element als Hinterleuchtungseinrichtung für das LCD-Element dient.

Ausgehend von der DE 199 16 747 A1 bzw. der WO 97/384347 ist es Aufgabe der vorliegenden Erfindung, eine Flüssigkristallanzeige anzugeben, die sowohl bei der Beleuchtung des LCD-Elements mit Sonnenlicht als auch mit aktivierter OLED-Hinterleuchtung eine verbesserte Darstellung von Information ermöglicht.

Die Lösung dieser Aufgabe erfolgt durch die Merkmale des Anspruchs 1.

Durch die Verwendung von LCD-Elementen mit internen Reflektoren oder internen Streuzentren, d. h. von LCD-Elementen bei denen sowohl die Beleuchtung von vorne aus Betrachtungsrichtung durch Tageslicht als auch von hinten mittels OLED-Hinterleuchtung transflektiv entlang der gleichen Strahlungsgänge erfolgt, ergibt sich eine verbesserte Ablesbarkeit der Anzeige bei unterschiedlichen Umgebungslichtbedingungen. Zusätzlich erübrigt sich durch die Kombination einer OLED-Hinterleuchtung mit solchen LCD-Elementen die sonst bei solchen LCD-Elementen notwendige Absorberschicht auf der Rückseite, da die Funktion dieser Absorberschicht in vorteilhafter Weise durch die vordere OLED-Ansteuerelektrode mit übernommen wird. Hierbei ist die vordere OLED-Ansteuerelektrode im Bereich der internen Reflektoren lichtdurchlässig und sonst lichtabsorbierend ausgebildet. Damit übernimmt das OLED-Element bzw. die Hinterleuchtungseinrichtung die bei diesen LCD-Elementen notwendige absorbierende Schicht auf der Rückseite außerhalb der internen Reflektoren. Hierdurch verringert sich auch die Bauhöhe einer solchen Anzeige.

Neben der geringen Bauhöhe liegt ein weiterer Vorteil darin, dass sowohl das LCD-Element als auch das OLED-Element zur Darstellung von Information geeignet ist. Damit kann beispielsweise die eigentliche Information auf dem LCD-Element dargestellt werden, während das in erster Linie als Hinterleuchtungseinrichtung fungierende OLED-Element zusätzlich ein Logo darstellen kann.

Diese Möglichkeit ein bestimmtes Muster in der OLED-Hinterleuchtung darzustellen wird insbesondere durch eine mehrteilige vordere und/oder mehrteilige OLED-Ansteuerelektrode ermöglicht.

Besonders geeignet sind hierfür LCD-Elemente mit einem cholesterischen multistabilen Flüssigkristall mit internen Reflektoren bzw. internen Streuzentren. Derartige LCD-Elemente sind beispielsweise aus der WO 03/096314 A2 bekannt.

Gemäß einer altemativen Ausgestaltung der Erfindung ist die vordere und/oder hintere OLED-Ansteuerelektrode nur im Bereich der internen Reflektoren des CM-LCD-Elements vorgesehen, wobei zumindest die vordere OLED-Ansteuerelektrode durchsichtig ist.

Gemäß einer weiteren vorteilhaften Ausgestaltung der Erfindung ist die hintere OLED-Ansteuerelektrode undurchsichtig. Auf diese Weise wird nur Licht im Bereich der internen Reflektoren erzeugt und die undurchsichtige hintere OLED-Ansteuerelektrode absorbiert von vorne auf die Flüssigkristallanzeigeeinrichtung einfallendes Licht.

Bei Einsatz eines TN- oder ETN-LCD-Elements (Twisted Nematic bzw. Extended Twisted Nematic) kann in gewohnter Weise zwischen der Hinterleuchtungseinrichtung in Form eines OLED-Elements und dem ETN-LCD-Element eine oder mehrere Enhancement-Folien vorgesehen werden.

In gewohnter Weise ist es auch möglich, dass das LCD-Element im stromlosen oder nicht angesteuerten Zustand durchsichtig oder undurchsichtig erscheint (normally white oder normally black).

Gemäß einer besonders bevorzugten Ausgestaltung der Erfindung ist die hintere Ansteuerelektrode des OLED-Elements reflektierend und insbesondere diffus reflektierend ausgebildet. Hierdurch erübrigt sich der insbesondere bei verdreht nematischen LCD-Elementen notwendige Transflektor oder Reflektor.

Gemäß einer altemativen Ausgestaltung nach Anspruch 13 wird die verbesserte Ablesbarkeit auch durch die Kombination einer OLED-Hinterleuchtung, einem transmissiven LCD-Element und einem Diffusor zwischen OLED-Hinterleuchtung und LCD-Element erreicht. Diese Ausgestaltung ist insbesondere für Fensterfassaden geeignet, wenn auf der Fensterfläche zusätzlich Information oder z. B. ein Logo angezeigt werden soll. Durch die Diffusorschicht wird auch eine gleichmäßige Ausleuchtung des LCD-Elements erreicht.

Gemäß einer vorteilhaften Ausgestaltung der Erfindung lässt sich dieser Diffusor vollflächig oder in bestimmten Bereichen zwischen durchsichtig und diffus hin und her schalten. Hierdurch lassen sich bestimmte Beleuchtungseffekte erzielen. Darüber hinaus kann zusätzlich auch in der Diffusorschicht Information dargestellt werden, z.B. ein Logo, ein Wasserzeichen oder dergleichen.

Weitere Einzelheiten, Merkmale und Vorteile der Erfindung ergeben sich aus der nachfolgenden Beschreibung bevorzugter Ausführungsformen anhand der Zeichnung. Es zeigt:
Fig. 1 eine schematische Darstellung zur Erläuterung eines LCD-Element mit OLED-Hinterleuchtung,
Fig. 2 eine erste Ausführungsform der Erfindung mit einem TIM LCD-Element,
Fig. 3 eine zweite Ausführungsform der Erfindung mit einem CM LCD-Element,
Fig. 4 eine Darstellung des bei der zweiten Ausführungsform verwendeten CM LCD-Elements, und
Fig. 5 eine Detaildarstellung der zweiten Ausführungsform.

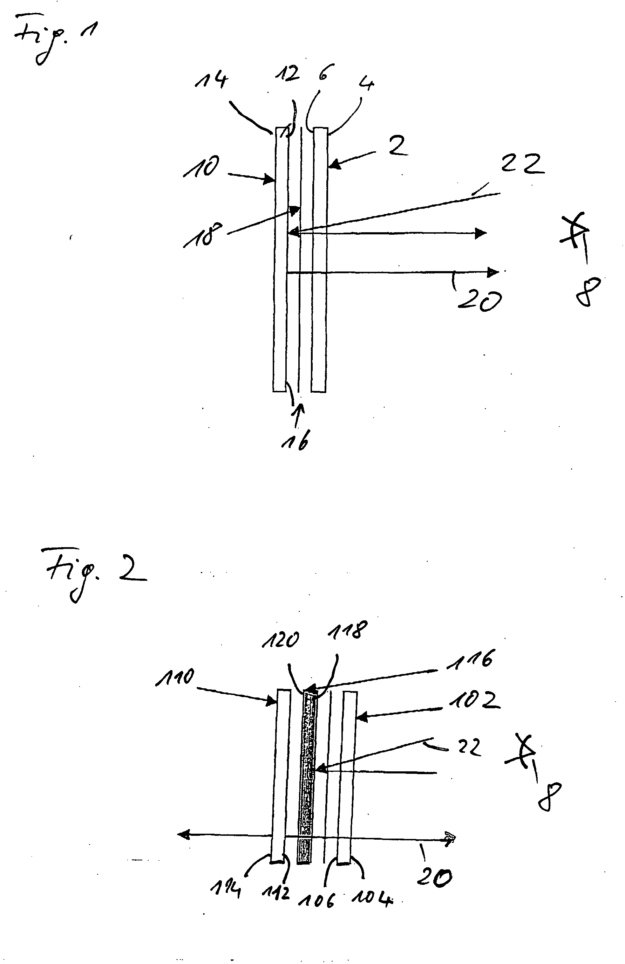

Fig. 1 zeigt eine schematisch schematische Darstellung zur Erläuterung eines LCD-Element mit OLED-Hinterleuchtung. Die dargestellte Anzeige umfasst ein ETN-LCD-Element 2 (ETN = Extended Twisted Nematic, erweitert verdreht nematisch). Das ETN-LCD-Element 2 umfasst vordere und hintere Ansteuerelektroden 4 und 6. Die vordere LCD-Ansteuerelektrode ist einem Betrachter 8 zugewandt. Aus Richtung des Betrachters 8 hinter dem ETN-LCD-Element 2 ist eine Hinterleuchtungseinrichtung in Form eines OLED-Elements 10 angeordnet. Das OLED-Element 10 umfasst vordere und hintere OLED-Ansteuerelektroden 12 und 14. Die hintere, d. h. die äußere OLED-Ansteuerelektrode 14 ist diffus reflektierend ausgebildet, so dass in dem OLED-Element 10 erzeugtes Licht entweder direkt oder nach Reflexion an der hinteren OLED-Ansteuerelektrode 14 nach vorne durch das ETN-LCD-Element 2 in Richtung Betrachter geführt wird - Pfeil 20. Die vordere OLED-Ansteuerelektrode 12 ist hierbei lichtdurchlässig. Von vorne auf die Flüssigkristallanzeige einfallendes Umgebungslicht 22 durchdringt das ETN-LCD-Element 2 und wird an der diffus reflektierenden hinteren OLED-Ansteuerelektrode wieder nach vorne in Richtung Betrachter 8 geführt.

Alternativ oder zusätzlich kann die vordere OLED-Ansteuerelektrode 12 transflektierend ausgebildet sein. D. h. aus Richtung des Betrachters 8 das ETN-LCD-Element durchdringendes Licht 22 wird von der transflektiven vorderen OLED-Ansteuerelektrode 12 wieder in Richtung Betrachter 8 reflektiert, während Licht 20 aus dem OLED-Element 10 durch die vordere OLED-Ansteuerelektrode 12 transmitiert wird.

Zwischen dem ETN-LCD-Element 2 und dem OLED-Element 10 ist ein Luftspalt 16 vorgesehen, in dem in an sich bekannter Weise eine Enhancement-Folie 18 angeordnet ist.

Durch diesen Aufbau ergibt sich eine sehr geringe Bauhöhe und die Hinterleuchtungseinrichtung in Form des OLED-Elements 10 wird zum integralen Bestandteil der Flüssigkristallanzeige. Zusätzlich erübrigt sich ein Transflektor oder Reflektor hinter dem ETN-LCD-Element 2, da diese Funktionen von dem OLED-Element 10 mit übernommen werden.

Fig. 2 zeigt eine erste Ausführungsform der Erfindung mit einem TIM-LCD-Element 102 mit vorderen und hinteren LCD-Ansteuerelektroden 104 und 106. Das TIM-LCD-Element 102 (TIM = Transparent imaging Matrix) ist im Auszustand durchsichtig und im Einzustand schwarz. Aus Richtung des Betrachters 8 hinter dem LCD-Element 102 ist die Hinterleuchtungseinrichtung in Form eines OLED-Elements 110 angeordnet. Das OLED-Element 110 umfasst vordere und hintere OLED-Ansteuerelektroden 112 und 114. Beide OLED-Ansteuerelektroden 114 und 116 und auch die beiden LCD-Ansteuerelektroden 104 und 106 sind durchsichtig ausgebildet.

In dem Luftspalt 16 zwischen OLED-Element 110 und LCD-Element 102 ist ein schaltbares Diffusor-Element 116 in Form eines PDLC- oder EASL-Elements vorgesehen. PDLC-Elemente (PDLC = Polymer Dispersed Liquid Crystal) wurden von der Kent State University entwickelt und werden insbesondere als zwischen durchsichtig und milchig durchscheinend schaltbare Fensterflächen verwendet. Üblicherweise ist das PDLC-Element im Auszustand durchsichtig und im Einzustand milchig durchscheinend.

Eine vergleichbare Funktion bietet auch ein EASL-Element als Diffusor-Element 116. Ein EASL-Element ist ein elektrisch adressierbarer smektischer Flüssigkristall (Electrically Addressable Smectic Liquid Crystal) das sich ebenfalls zwischen einem durchsichtigen und einem milchig durchscheinenden Zustand umschalten lässt. Hierbei bleibt der jeweilige Schaltzustand nach dem Schalten ohne Spannung bestehen, ein EASL-Element ist also bistabil.

Für die vorliegende Erfindung geeignete PDLC-Elemente werden beispielsweise von der Anmelderin selbst und geeignete EASL-Elemente werden von der Firma Polydisplay aus Norwegen vertrieben.

Zur Umschaltung zwischen den beiden Zuständen sind auf der Vorder- und Rückseite des Diffusor-Elements 116 vordere und hintere Diffusor-Ansteuerelektroden 118 und 120 vorhanden. Bei auf diffus geschaltetem Diffusor-Element 116 wird aus Richtung des Betrachters 8 einfallendes Licht 22, das auf das angesteuerte Diffusor-Element 116 trifft, von diesem durch das TIM-LCD-Element hindurch zurück in Richtung Betrachter 8 reflektiert bzw. gestreut. Trifft das von vorne einfallende Licht 22 auf eine nicht angesteuerte Diffusorelektrode 118, 120 durchdringt das einfallend Licht 22 das Diffusor-Element 116 und das dahinter befindliche OLED-Element 110, d. h. die Flüssigkristallanzeige erscheint durchsichtig.

Falls die Diffusor-Ansteuerelektroden 118, 120 nur ein vollflächiges Segment aufweisen, lässt sich damit nur das gesamte Diffusor-Element 116 zwischen den beiden Zuständen Ein und Aus bzw. milchig durchscheinend und klar durchsichtig umschalten. Sind die Diffusor-Ansteuerelektroden 118, 120 segmentiert oder pixeliert, lässt sich auch in dem Diffusor-Element 116 ein Muster, z. B. ein Logo oder eine Art Wasserzeichen darstellen.

Die gesamte Flüssigkristallanzeige gemäß der ersten Ausführungsform nach Fig. 2 lässt sich damit für Fensterfassaden auf denen zusätzlich zur Fensterfunktion Informationen dargestellt werden sollen. Durch Ein- und Auschalten des Diffusor-Elements 116 läßt sich bei eingeschaltetem OLED-Element 110 ein transflektiver Nachtbetrieb - Diffusor-Element 116 eingeschaltet - oder ein transmissiver Nachtbetrieb - Diffusor-Element 116 ausgeschaltet realisieren. Im Tagbetrieb ist das Diffusor-Element 116 je nach Wunsch ein- oder ausgeschaltet.

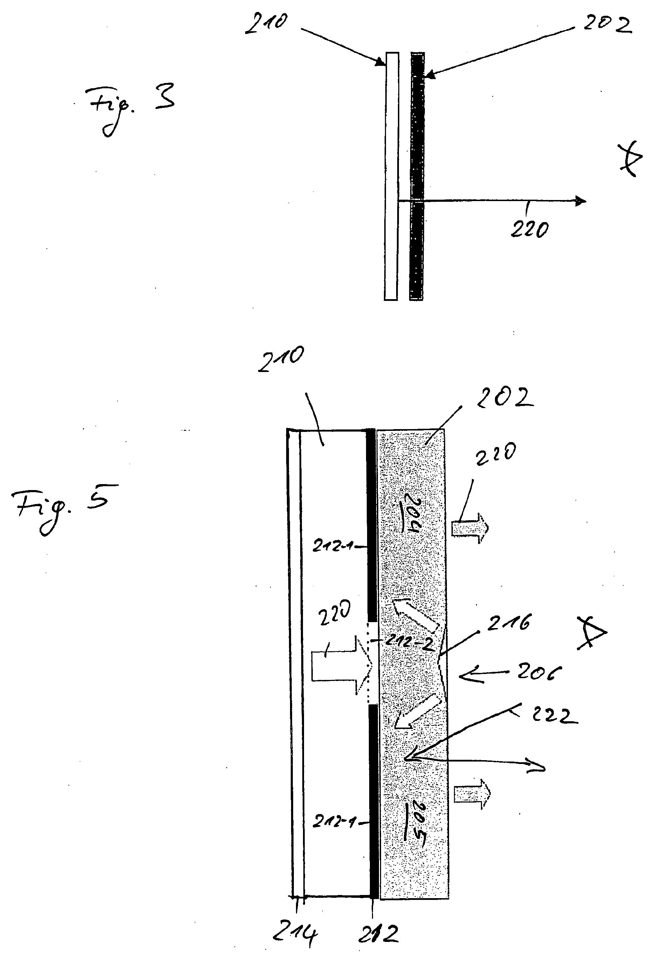

Figuren 3 und 5 zeigen eine zweite beispielhafte Ausführungsform der Erfindung mit einem CM-LCD-Element 202 mit einem cholesterischen multistabilen Flüssigkristall und einer Hinterleuchtungseinrichtung in Form eines OLED-Elements 210. Das OLED-Element 210 umfasst vordere und hintere OLED-Ansteuerelektrode 212, 214.

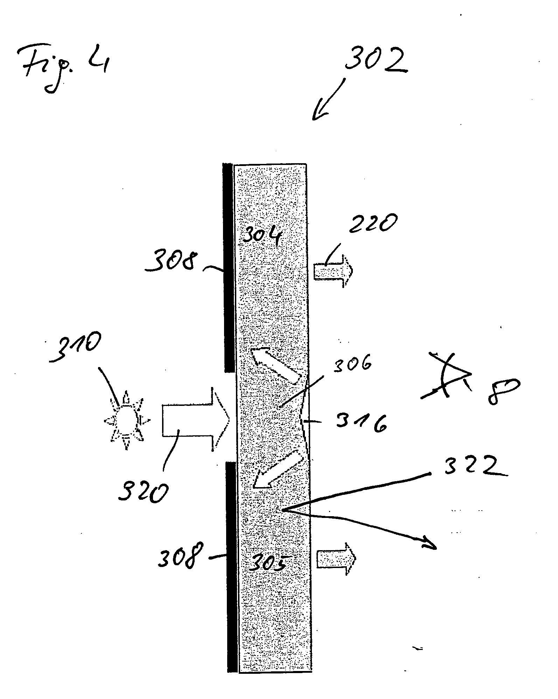

Fig. 4 zeigt den prinzipiellen Aufbau eines an sich bekannten CM-LCD-Elements 302. Eine Mehrzahl von Flüssigkristall-Pixelelementen oder Flüssigkristallkammern 304, 305 sind in einer ein- oder zweidimensionalen Matrix angeordnet. Zwischen den einzelnen Flüssigkristallkammern 304, 305 befindet sich ein displaytechnisch nicht aktiver Bereich in Form eines Klebebereichs 306 durch den die einzelnen Flüssigkristallkammern 304, 305 voneinander getrennt sind. Von dem Betrachter 8 aus gesehen auf der Rückseite des CM-LCD-Elements 302 ist eine Licht absorbierende Schicht bzw. eine Absorberschicht 308 vorgesehen, die sich jedoch nicht über den Klebebereich 306 erstreckt. Hinter der Absorberschicht 308 ist eine Hinterleuchtungseinrichtung 310 vorgesehen. An der Vorderseite des CM-LCD-Elements 302 ist im Klebebereich 306 ein interner Reflektor 316 angeordnet.

Licht 320 aus der Hinterleuchtungseinrichtung 310 dringt von hinten in den Klebebereich 306 ein und wird durch den internen Reflektor 316 seitlich in die benachbarten Flüssigkristallkammern 304, 305 reflektiert. Je nachdem, ob der jeweilige cholesterische Flüssigkristall über nicht dargestellte Ansteuerelektroden angesteuert oder nicht, wird das Licht 320 aus der Hinterleuchtungseinrichtung 310 in der Absorberschicht 308 absorbiert - dunkler Zustand des CM-LCD-Elements 310 - oder nach vorne in Richtung Betrachter 8 reflektiert - heller Zustand des CM-LCD-Elements 310. Der Strahlengang für die Beleuchtung des CM-LCD-Elements 302 von vorne mit Umgebungslicht 322 ist hier der gleiche wie bei Beleuchtung von hinten mit interner Umlenkung des Lichts.

Das CM-LCD-Element 202 nach der vorliegenden Erfindung unterscheidet sich von dem bekannten CM-LCD-Element 302 nach Fig. 4 lediglich dadurch, dass die Funktion der Absorberschicht 308 in Fig. 4 durch die vordere OLED-Ansteuerelektrode 212 mit übernommen wird. Die vordere OLED-Ansteuerelektrode 212 weist daher eine ersten lichtabsorbierenden Bereich 212-1 hinter den Flüssigkristallkammern 204, 205 und einen zweiten lichtdurchlässigen Bereich 212-2 hinter dem Klebebereich 206 auf. Eine getrennte Absorberschicht erübrigt sich daher. Die übrigen Komponenten des CM-LCD-Elements 202 entsprechen den Komponenten des bekannten CM-LCD-Elements 302 nach Fig. 4, so dass sich eine weitere Erläuterung hiervon erübrigt.

Anstelle der des internen Reflektors 216 lassen sich auch Streuzentren verwenden bzw. vorsehen, die das Licht aus dem OLED-Element 210 diffus in die Flüssigkristallkammern 204, 205 streuen.

Be der Ausführungsform nach Fig. 3 und 5 wird das Licht 220 aus dem OLED-Element 210 im Bereich des Kleberands 206 zwischen zwei Flüssigkristallkammern 204, 205 eingekoppelt. Alternativ ist es auch möglich das Licht aus dem OLED-Element 210 über andere displaytechnisch nicht aktive Bereiche einzukoppeln .

Bezugszeichenliste:
Fig. 1:
   - 2: LCD-Element
   - 4: vordere LCD-Ansteuerelektrode
   - 6: hintere LCD-Ansteuerelektrode
   - 8: Betrachter
   - 10: OLED-Element
   - 12: vordere OLED-Ansteuerelektrode
   - 14: hintere OLED-Ansteuerelektrode
   - 16: Luftspalt
   - 18: Enhancement-Folie
   - 20: Licht aus OLED-Element
   - 22: aus Richtung des Betrachters einfallendes Licht
Fig. 2:
   - 102: TIM-LCD-Element
   - 104: vordere LCD-Ansteuerelektrode
   - 106: hintere LCD-Ansteuerelektrode
   - 110: OLED-Element
   - 112: vordere OLED-Ansteuerelektrode
   - 114: hintere OLED-Ansteuerelektrode
   - 116: Diffusor-Element
   - 118: vordere Diffusor-Ansteuerelektrode
   - 120: hintere Diffusor-Ansteuerelektrode
Figuren 3 und 5:
   - 202: CM-LCD-Element
   - 204, 205: Flüssigkristallkammern
   - 206: Klebebereich
   - 210: OLED-Element
   - 212: vordere OLED-Ansteuerelektrode
   - 212-1: absorbierender Bereich
   - 212-2: lichtdurchlässiger Bereich
   - 214: hintere OLED-Ansteuerelektrode
   - 216: interner Reflektor
   - 220: Licht aus dem OLED-Element
   - 222: Umgebungslicht
Fig. 4:
   - 302: CM-LCD-Element
   - 304, 305: Flüssigkristallkammern
   - 306: Klebebereich
   - 308: Absorberschicht
   - 310: Hinterleuchtungseinrichtung
   - 316: interner Reflektor
   - 320: Licht aus der Hinterleuchtungseinrichtung
   - 322: Umgebungslicht

## Patentansprüche

1. Flüssigkristallanzeige mit
einem LCD-Element (2; 102; 202) zur Anzeige von Information mit vorderen und hinteren LCD-Ansteuerelektroden (4, 6; 104, 106; 204, 206), zwischen denen ein Flüssigkristall eingebettet ist und
einer Hinterleuchtungseinrichtung (10; 110; 210) zur Ausleuchtung des LCD-Elements von hinten,
wobei die Hinterleuchtungseinrichtung ein schichtförmiges OLED-Element (10; 110; 210) umfasst, das vordere, dem LCD-Element zugewandte und hintere, von dem LCD-Element abgewandte OLED-Ansteuerelektroden (12, 14; 112, 114; 212, 214) mit OLED-Material dazwischen umfasst, und
wobei zumindest die vordere OLED-Ansteuerelektrode (12; 112; 212) wenigstens teilweise lichtdurchlässig ist,
**dadurch gekennzeichnet,**
**dass** das LCD-Element (202) interne Reflektoren (216) oder interne Streuzentren umfasst.

2. Flüssigkristallanzeige nach Anspruch 1, **dadurch gekennzeichnet, dass** die vordere OLED-Ansteuerelektrode (212) im Bereich der internen Reflektoren (216) oder der internen Streuzentren lichtdurchlässig und sonst lichtabsorbierend ausgebildet ist.

3. Flüssigkristallanzeige nach Anspruch 1, **dadurch gekennzeichnet**, **dadurch, dass** die vordere OLED-Ansteuerelektrode (212-2) durchsichtig ausgebildet ist und dass die vordere und/oder die hintere OLED-Ansteuerelektrode (212-2, 214) nur im Bereich der internen Reflektoren (216) oder der internen Streuzentren vorgesehen ist.

4. Flüssigkristallanzeige nach einem der vorhergehenden Ansprüche, **dadurch gekennzeichnet, dass** das LCD-Element ein cholesterisches multistabiles LCD-Element (202) ist.

5. Flüssigkristallanzeige nach einem der vorhergehenden Ansprüche, **dadurch gekennzeichnet, dass** zumindest die vordere OLED-Elektrode (12; 112; 212) mehrteilig ausgebildet ist.

6. Flüssigkristallanzeige nach einem der vorhergehenden Ansprüche, **dadurch gekennzeichnet, dass** das schichtförmige OLED-Element (10; 110; 210) zumindest die aktive Anzeigefläche des LCD-Elements (2; 102; 202) überdeckt.

7. Flüssigkristall nach einem der vorhergehenden Ansprüche, **dadurch gekennzeichnet, dass** zwischen OLED-Element (10; 110; 210) und LCD-Element (2; 102; 202) wenigstens eine Enhancementfolie (18) angeordnet ist.

8. Flüssigkristallanzeige nach einem der vorhergehenden Ansprüche, **dadurch gekennzeichnet, dass** das LCD-Element (2; 102; 202) in ausgeschaltetem Zustand durchsichtig oder undurchsichtig ist.

9. Flüssigkristallanzeige nach einem der vorhergehenden Ansprüche, **dadurch gekennzeichnet, dass** die hintere OLED-Ansteuerelektrode (114) in Richtung vordere OLED-Ansteuerelektrode (112) reflektierend, insbesondere diffus reflektierend ausgebildet ist.

10. Flüssigkristallanzeige nach Anspruch 9, **dadurch gekennzeichnet, dass** das LCD-Element (2) einen verdrehtnematischen Flüssigkristall umfasst.

11. Flüssigkristallanzeige nach Anspruch 9 oder 10, **dadurch gekennzeichnet, dass** das LCD-Element (2) transflektiv ausgebildet ist.

12. Flüssigkristallanzeige nach einem der vorhergehenden Ansprüche, **dadurch gekennzeichnet, dass** zwischen OLED-Element (110) und LCD-Element (102) ein Diffusor-Element (116) angeordnet ist.

13. Flüssigkristallanzeige mit
einem LCD-Element (2; 102; 202) zur Anzeige von Information mit vorderen und hinteren LCD-Ansteuerelektroden (4, 6; 104, 106; 204, 206), zwischen denen ein Flüssigkristall eingebettet ist und
einer Hinterleuchtungseinrichtung (10; 110; 210) zur Ausleuchtung des LCD-Elements von hinten,
wobei die Hinterleuchtungseinrichtung ein schichtförmiges OLED-Element (10; 110; 210) umfasst, das vordere, dem LCD-Element zugewandte und hintere, von dem LCD-Element abgewandte OLED-Ansteuerelektroden (12, 14; 112, 114; 212, 214) mit OLED-Material dazwischen umfasst, und
wobei zumindest die vordere OLED-Ansteuerelektrode (12; 112; 212) wenigstens teilweise lichtdurchlässig ist,
**dadurch gekennzeichnet,**
**dass** zwischen OLED-Element (110) und LCD-Element (102) ein Diffusor-Element (116) angeordnet ist. '

14. Flüssigkristallanzeige nach Anspruch 12 oder 13, **dadurch gekennzeichnet, dass** das Diffusor-Element (116) zwischen durchsichtig und diffus schaltbar ist.

15. Flüssigkristallanzeige nach Anspruch 14, **dadurch gekennzeichnet, dass** das schaltbare Diffusor-Element (116) ein PDLC- oder ein EASL-Element ist.

16. Flüssigkristallanzeige nach einem der vorhergehenden Ansprüche, **dadurch gekennzeichnet, dass** die hintere OLED-Ansteuerelektrode (214) lichtabsorbierend ausgebildet ist.

17. Flüssigkristallanzeige nach einem der vorhergehenden Ansprüche, **dadurch gekennzeichnet, dass** auf der dem OLED-Element (210) zugewandten Seite des CM-LCD-Elements (202) außerhalb des Bereichs der internen Reflektoren (216) oder der internen Streuzentren eine Licht absorbierende Schicht vorgesehen ist.

18. Flüssigkristallanzeige nach einem der vorhergehenden Ansprüche, **dadurch gekennzeichnet, dass** durch das OLED-Element (10; 110; 210) und/oder durch das schaltbare Diffusor-Element (116) ein bestimmtes Muster darstellbar ist.
